# EUROPEAN PATENT SPECIFICATION

(11) **EP 1 755 291 B1**
(45) Date of publication and mention of the grant of the patent: **10.03.2010**
(21) Application number: 06017280.6
(22) Date of filing: 18.08.2006
(51) Int. Cl.: H04L 12/56

(54) **Priority control system and priority control method**
Prioritätssteuerungssystem und -verfahren
Système et procédé de contrôle des priorités

(30) Priority: 19.08.2005 JP 2005238716
(43) Date of publication of application: 21.02.2007
(73) Proprietor: NTT DoCoMo, Inc., Chiyoda-ku Tokyo 100-6150 (JP)
(72) Inventor: Kaneda, Shigeru, Chiyoda-ku, Tokyo 100-6150 (JP); Shinagawa, Noriteru, Chiyoda-ku, Tokyo 100-6150 (JP); Akinaga, Yoshikazu, Chiyoda-ku, Tokyo 100-6150 (JP)
(74) Representative: Viering, Jentschura & Partner

(56) References cited:
- US-A1- 2004 047 319

## Description

### BACKGROUND OF THE INVENTION

### Field of the Invention

The present invention relates to a priority control system and priority control method.

### Related Background of the Invention

In a mobile communication system, users use their terminals at unfixed places and times for communication and thus communication occurs in a variety of situations around the users. For example, at such events as fireworks displays and soccer matches, or in disasters or the like, there occur connection requests (traffic) several times to several ten times as much as normal. In such cases, in order to avoid a situation (congestion state) in which excess loads are imposed on the communication system to result in failure in providing services, an operator of the mobile communication system places restrictions on the connection requests to mandatorily reduce the number of connection requests and informs the users through switching equipment that the users are requested to call later after a long moment, thereby reducing the loads on the communication system.

There is also a known priority control method of performing priority control as follows: an ID of a communication terminal is preliminarily registered in a database of a communication system, the database is searched upon reception of a call request from the communication terminal, and when the ID of the communication terminal is found in the database, the communication terminal is freed from the origination restrictions within a specific limited priority time slot (Japanese Patent Application Laid-Open No. 2004-120136).

There is also another known priority control method of performing priority control by using contention priority slots (see US 2004/0047319).

### SUMMARY OF THE INVENTION

However, the congestion control method and priority control method according to the above-described conventional technology had the following problems. Namely, since the priority control method according to the conventional technology mandatorily and uniformly restricts admitted terminals, the users usually again originate (or reattempt) calls at very short time intervals before a connection is made to a network. Therefore, there arise the following problems: multiple reattempts increase the loads on the network and the users increase frustration through repeated reattempts without knowing when a connection is made.

Furthermore, the priority control method according to the conventional technology had the drawback of increase in loads on a server because at every occasion of origination from a terminal, an access was made to the database to check whether the terminal is registered in the database. Since a connection is made without any origination restrictions on each terminal with a priority, it is necessary to preliminarily secure necessary resources for ensuring the connection and this reduces utilization efficiency of the communication system. Furthermore, where the resources were shared with non-priority connections, there was the problem of occurrence of situations in which connection failure occurred even in a priority time slot.

An object of the present invention is to solve the above problems and thereby to provide a priority control system and priority control method capable of reducing loads on a communication system and reducing the number of user's repeated call originations.

In order to achieve the above object, a priority control system according to the present invention is a priority control system for performing priority control upon a connection request of communication from a terminal, which comprises: priority control determining means arranged as follows: when the connection request from the terminal does not contain priority information including a priority control time slot of the terminal, the priority control determining means requests an issue of new priority information; when the connection request from the terminal contains the priority information, the priority control determining means performs a comparison between the priority control time slot in the priority information and a present time; when it is determined by the comparison that the priority time slot includes the present time, the priority control determining means requests priority control; when it is determined by the comparison that the priority time slot does not include the present time, the priority control determining means requests an issue of new priority information; scheduling means for, when the priority control determining means requests the issue of the new priority information, determining a priority control time slot associated with the new priority information of the terminal; priority transmitting means for transmitting to the terminal the new priority information including the priority control time slot determined by the scheduling means; and restriction controlling means for, when the priority control determining means requests the priority control, performing the priority control of the terminal.

In this configuration, a priority control time slot is issued as a priority to encourage a user to make a connection request in the priority control time slot, which can temporally spread connection requests congested in a short period of time. The preferential control is performed only in the specific priority control time slot, which can reduce the loads on the mobile communication system. The user can reduce unnecessary connection requests (reattempts) because the priority control is performed in the specific priority control time slot included in the priority.

In this case, the priority control system is preferably configured as follows: it further comprises priority issue history storing means for storing an issued priority count as a number of priorities issued per unit time slot, and a maximum available count as a number of priorities admissible per unit time slot, and the scheduling means sequentially determines the priority time slot associated with the new priority information in order of receipt of the connection request of the terminal so that the issued priority count does not exceed the maximum available count, with reference to the priority issue history storing means.

In this configuration, the new priority can be sequentially given to the terminal in order of receipt of the connection request from the terminal, without exceeding the maximum available count as the number of priorities admissible per unit time slot.

In this case, the priority control system is preferably configured as follows: the system further comprises traffic estimating means for estimating a connection request amount, and the scheduling means determines the priority control time slot, using the connection request amount calculated by the traffic estimating means.

In this configuration, the priority control time slot can be determined according o the future connection request amount.

In this case, the priority control system is preferably configured as follows: the system further comprises priority control history storing means for storing a record of a priority control count as a number of terminal connections based on the priority control per unit time slot, and the scheduling means refers to the priority control history storing means to compare the issued priority count with the priority control count to determine the maximum available count.

In this configuration, the maximum available count is determined by comparing the issued priority count with the priority control count as the number of terminals connected per unit time slot by the priority control, whereby the priority can be issued according to the actual priority control count.

In this case, preferably, when the connection request from the terminal subjected to the priority control is rejected, the priority transmitting means again transmits to the terminal the priority information contained in the connection request.

In this configuration, the terminal can use the priority right any number of times in the priority control time slot associated with the priority before a connection is made to the communication system, whereby a connection rate is improved in the priority control time slot.

In this case, preferably, the scheduling means gives a specific terminal the priority information including the priority control time slot relatively close to the present time.

In this configuration, each terminal can be given the priority containing the priority control time slot closer to the present time, and each user can be provided with a different waiting time for communication, which can achieve differentiation of communication service.

In this case, preferably, the restriction control means performs the priority control at a restriction rate relatively lower than a restriction rate in the priority control, for a specific terminal.

In this configuration, the priority control at the restriction rate lower than the restriction rate in the normal priority control can be performed for each terminal, and a difference can be made in ease of connection for each user, which can achieve differentiation of communication service.

In this case, the priority control system is preferably configured as follows: it further comprises a priority issuer for preliminarily receiving an issue request of the priority information from the terminal and for issuing a priority including a specific priority control time slot.

In this configuration, the terminal can preliminarily acquire the priority and this improves user's convenience.

In this case, preferably, the terminal comprises: priority transmitting/receiving means for receiving the new priority information from the priority transmitting means and for transmitting the connection request with the new priority information therein.

In this configuration, the priority transmitting/receiving means receives the new priority information from the priority transmitting means, and transmits the connection request with the new priority information therein, and this results in encouraging the user to make the connection request in the specific priority control time slot, which can reduce unnecessary connection requests and which can temporally spread connection requests congested in a short period of time, so as to reduce the loads on the mobile communication system.

Another aspect of the present invention is a priority control method of performing priority control upon a connection request of communication from a terminal, comprising: a priority control determining step arranged as follows: when the connection request from the terminal does not contain priority information including a priority control time slot of the terminal, the priority control determining step is to request an issue of new priority information; when the connection request from the terminal contains the priority information, the priority control determining step is to perform a comparison between the priority control time slot in the priority information and a present time; when it is determined by the comparison that the priority time slot includes the present time, the priority control determining step is to request the priority control; when it is determined by the comparison that the priority time slot does not include the present time, the priority control determining step is to request an issue of new priority information; a scheduling step arranged as follows: when the issue of the new priority information is requested in the priority control determining step, the scheduling step is to determine a priority control time slot associated with the new priority information of the terminal; a priority transmitting step of transmitting to the terminal the new priority information containing the priority control time slot determined in the scheduling step; a restriction control step of performing the priority control of the terminal when the priority control is requested in the priority control determining step; and a priority transmitting/receiving step wherein when the terminal receives the new priority information, the terminal transmits the connection request with the new priority information therein.

### BRIEF DESCRIPTION OF THE DRAWINGS

Fig. 1 is a diagram showing a configuration of a priority control system according to the first embodiment of the present invention.
Fig. 2 is a diagram showing an example of a data configuration in a priority issue history storage shown in Fig. 1.
Fig. 3 is a flowchart showing an operation of priority issue in the priority control system according to the first embodiment of the present invention.
Fig. 4 is a flowchart showing an operation of priority reissue in the priority control system according to the first embodiment of the present invention.
Fig. 5 is a flowchart showing an operation of priority control in the priority control system according to the first embodiment of the present invention.
Fig. 6 is a diagram showing a configuration of a priority control system according to the second embodiment of the present invention.
Fig. 7 is a diagram showing a configuration of a priority control system according to the third embodiment of the present invention.
Fig. 8 is a diagram showing a configuration of a priority control system according to the fourth embodiment of the present invention.
Fig. 9 is a diagram showing a configuration of a priority control system according to the fifth embodiment of the present invention.
Fig. 10 is a diagram showing situations in which origination from each terminal is restricted in the fifth embodiment of the present invention.
Fig. 11 is a diagram showing a configuration of a priority control system according to the sixth embodiment of the present invention.

### DESCRIPTION OF THE PREFERRED EMBODIMENTS

Priority control systems according to embodiments of the present invention will be described below with reference to the drawings.

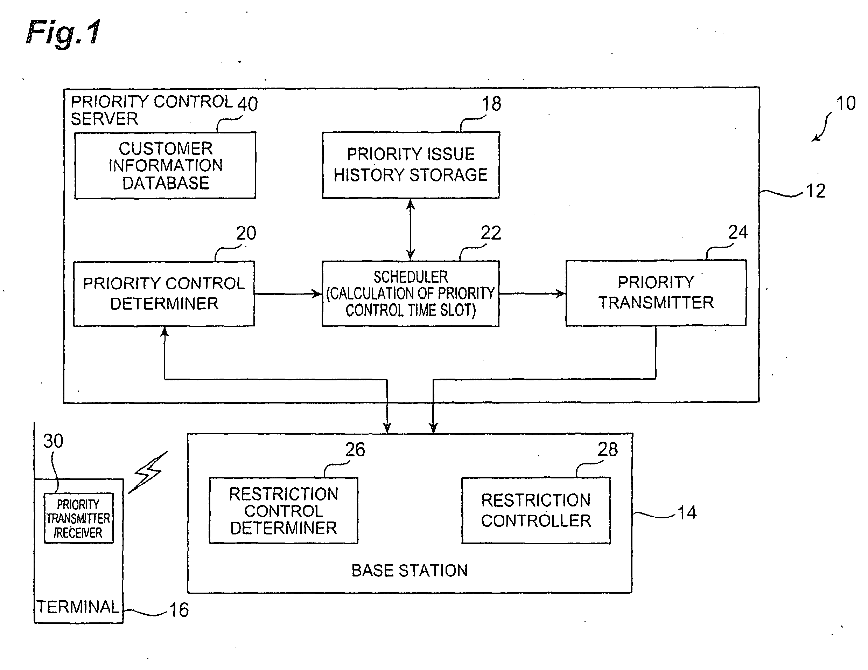

First, a configuration of a priority control system according to an embodiment of the present invention will be described. Fig. 1 is a diagram showing a configuration of the priority control system 10 according to the first embodiment of the present invention. The priority control system 10 is comprised of a priority control server 12, a base station 14, and a terminal 16.

The priority control server 12 comprises the following functional components: priority issue history storage 18 (priority issue history storing means), priority control determiner 20 (priority control determining means), scheduler 22 (scheduling means), priority transmitter 24 (priority transmitting means), and customer information database 40. Each of the components will be described below in detail.

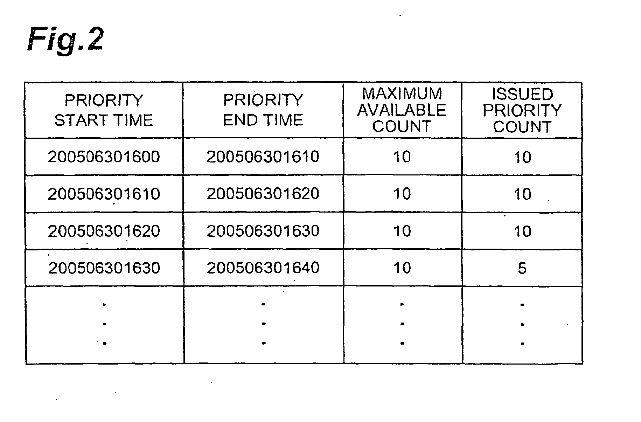

Fig. 2 shows an example of a data configuration stored in the priority issue history storage 18. As shown in the same figure, the priority issue history storage 18 stores, for example, a priority control start time indicating a time of a start of each priority control, "200506301600," a priority control end time indicating a time of an end of each priority control, "200506301610," a maximum available count indicating a maximum number of priority information that can be issued in each time slot identified by corresponding priority control start and end times, "10," and an issued priority count indicating the number of priority information actually issued in each time slot of interest.

Referring back to Fig. 1, the priority control determiner 20 receives a connection request containing priority information or a connection request not containing priority information from the base station 14, and determines whether priority information is to be issued for the terminal 16, and whether priority control is to be carried out. More specifically, when the priority information is not included in the connection request received from the base station 14, the priority control determiner 20 requests the scheduler 22 to issue the priority information, in order to issue the priority information. When the priority information is included in the connection request, the priority control determiner 20 compares a priority control time slot in the priority with the present time and requests the base station 14 to perform the priority control if the present time is included in the priority control time slot. When the present time is not included in the priority control time slot, the priority information is taken away and the priority control determiner 20 requests the scheduler 22 to issue priority information, in order to issue new priority information.

The scheduler 22 determines a priority control time slot for priority control on the basis of the priority issue request received from the priority control determiner 20 in accordance with a determination rule preliminarily set in the scheduler 22, and issues priority information. More specifically, supposing the priority issue rule is to allocate a priority control time slot of ten minutes to each of ten users, the scheduler 22 refers to a time slot closest to the present time in the priority issue history storage 18 to determine a time slot for which the issued priority count does not reach the maximum available count, as the priority control time slot of the terminal, and notifies the priority transmitter 24 of the priority control time slot determined. Furthermore, the scheduler 22 adds 1 to the issued priority count in the priority issue history. If the issued priority count included in the record closest to the present time has already reached the maximum available count, the scheduler 22 refers to the time slot next closest to the present time. In the example shown in Fig. 2, the scheduler determines the time slot from 200506301630 (16:30 June 30, 2005) to 200506301640 (16:40 June 30, 2005) as a priority control time slot and notifies the priority transmitter 24 of the priority control time slot thus determined.

The priority transmitter 24 transmits the priority control time slot received from the scheduler 22, as priority information to the terminal 16 via the base station 14.

The customer information database 40 stores information about each user of terminal 16. For example, the customer information database 40 stores information of priority control rejection that a certain user (terminal 16) rejects execution of priority control and desires normal restriction control.

The base station 14 comprises the following functional components: restriction control determiner 26 and restriction controller 28 (restriction controlling means). Each of the components will be described below in detail.

When the restriction control determiner 26 receives a connection request from the mobile communication terminal 16, it determines whether restriction control is to be executed. More specifically, the restriction control determiner 26 confirms whether execution of restriction control is set by the priority control server 12, and, when it is not set, the restriction control determiner 26 attempts a connection to the network in the same manner as in the case of the normal processing of connection request. When the restriction control is set, the restriction control determiner 26 sends the connection request to the priority control determiner 20 in the priority control server except that there is the information of priority control rejection in the information stored in the customer information database 40 or in the connection request. When there is the information of priority control rejection, the restriction control determiner 26 requests the restriction controller 28 to perform restriction control based on a normal restriction rate.

The restriction controller 28 controls the connection request of the terminal in accordance with the normal restriction rate or a restriction rate lower than normal in the priority control, based on the request of restriction control from the restriction control determiner 26 or from the priority control determiner 20. For example, where the normal restriction rate is set to admit connection at only 30% of the connection request amount, the restriction controller 28 controls so as to admit connection at 60% of the connection request amount during the priority control.

The terminal 16 comprises priority transmitter/receiver 30 (priority transmitting/receiving means) as a functional component. The priority transmitter/receiver 30 receives and holds the priority information transmitted from the priority transmitter 24 in the priority control server 12 upon a call request. The priority transmitter/receiver 30 transmits to the base station 14 a connection request with the priority held, upon a call request.

The operation of the priority control system 10 will be described below.

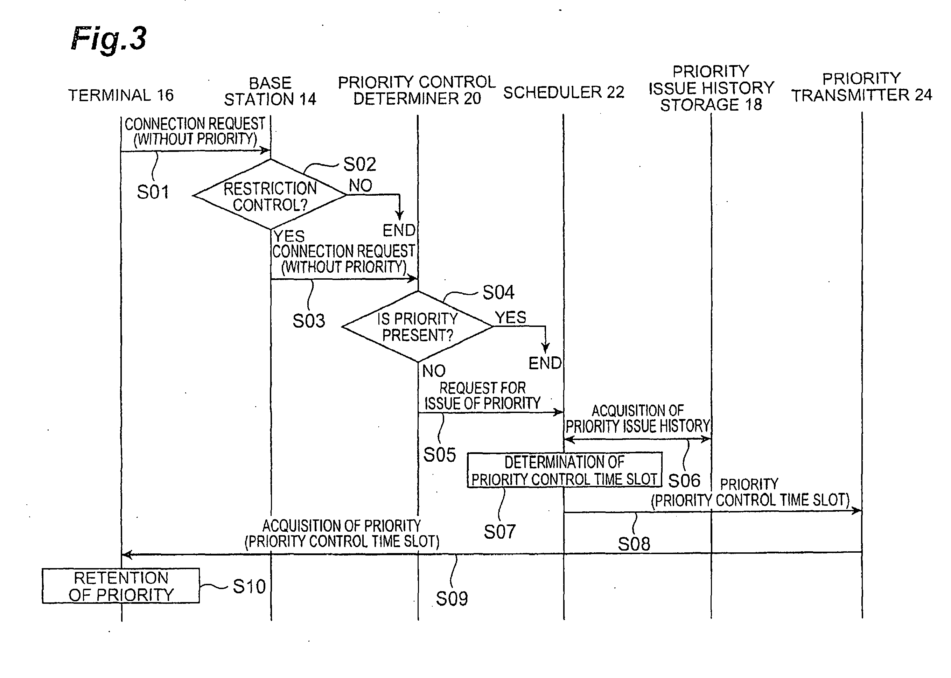

Fig. 3 is a flowchart showing an operation in which the terminal 16 receives the priority information, in the priority control system 10. This operation is performed when during restriction control of base station 14 the terminal 16 having no priority information and not rejecting the priority control attempts to originate a call. First, the terminal 16 transmits a connection request without priority information to the base station 14 (step S01). The base station 14 receives the connection request from the terminal 16, and the restriction control determiner 26 thereof determines whether restriction control is set on the base station 14. When the restriction control is set, it is further determined whether there is the information of priority control rejection on the terminal (step S02). When the restriction control is set and when there is no information of priority control rejection, the restriction control determiner 26 sends the connection request without priority information to the priority control determiner 20 of the priority control server 12 (step S03). The priority control determiner 20 determines whether priority information is included in the connection request received from the restriction control determiner 26 (step S04). When the priority information is not included, the priority control determiner 20 sends a priority issue request to the scheduler 22 in order to issue the priority information (step S05). The scheduler 22 refers to the priority issue history storage 18 as to the priority issue request received from the priority control determiner 20 (step S06), determines a priority control time slot (step S07), and notifies the priority transmitter 24 of the priority control time slot determined (step S08). The priority transmitter 24 transmits the priority information containing the priority control time slot to the terminal 16 via the base station 14 (step S09). The terminal 16 receives and holds the priority information from the priority transmitter 24 (step S 10).

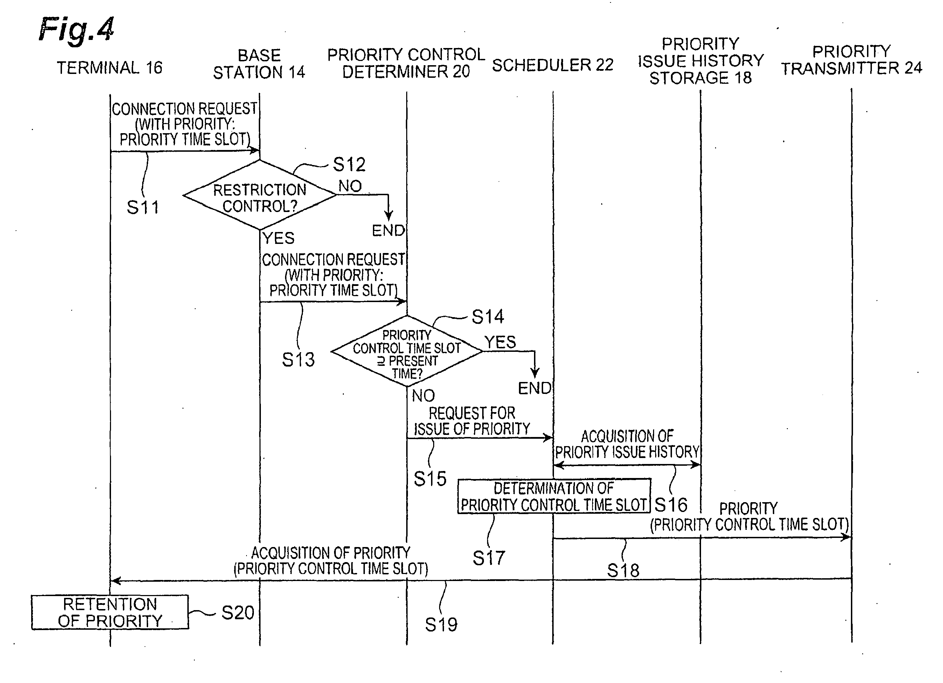

Fig. 4 is a flowchart showing an operation in which the terminal 16 again receives the priority information, in the priority control system 10. This operation is carried out when during restriction control of the base station 14 the terminal 16 having the priority information and not rejecting the priority control again attempts to originate a call in a period except for the priority control time slot. First, the mobile communication terminal 16 transmits a connection request containing the priority information, to the base station 14 (step S11). The base station 14 receives the connection request from the terminal 16 and the restriction control determiner 26 thereof determines whether the restriction control is set on the base station 14. When the restriction control is set, the restriction control determiner 26 further determines whether there is the information of priority control rejection on the terminal 16 (step S12). When the restriction control is set and when there is no information of priority control rejection, the restriction control determiner 26 transmits the connection request with the priority information to the priority control determiner 20 of the priority control server 12 (step S13). The priority control determiner 20 determines whether priority information is included in the connection request received from the restriction control determiner 26 and, when the priority information is included, the priority control determiner 20 compares the priority control time slot in the priority information with the present time (step S14). When the present time is not included in the priority control time slot, the determiner 20 takes away the priority information transmitted this time, and sends a priority issue request for an issue of another priority information to the scheduler 22 (step S15). The subsequent procedure (step S16 to step S20) is much the same as the steps S06-S10 in Fig. 3.

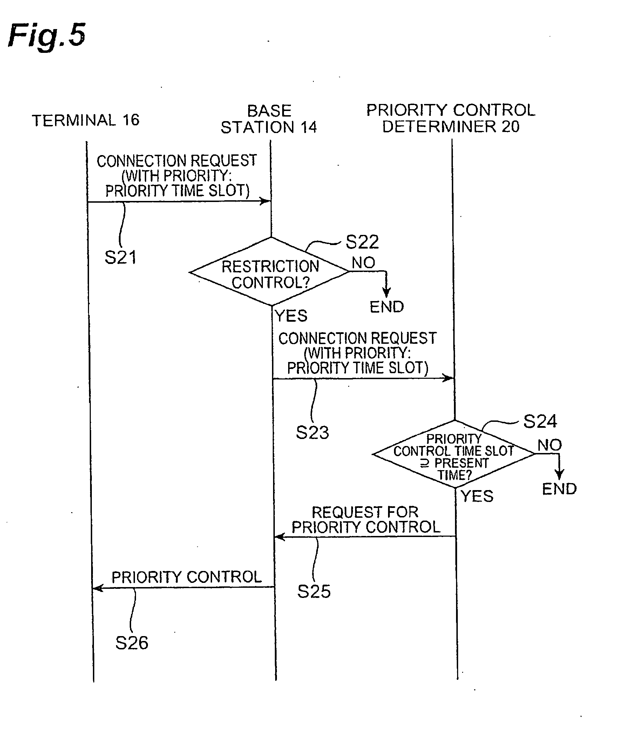

Fig. 5 is a flowchart showing an operation in which the terminal 16 is subjected to the priority control, in the priority control system 10. This operation is carried out when the terminal 16 has the priority information and originates a call in the priority control time slot. First, the terminal 16 transmits a connection request containing the priority information to the base station 14 (step S21). The base station 14 receives the connection request from the terminal 16 and the restriction control determiner 26 thereof determines whether the restriction control is set on the base station 14. When the restriction control is set, the restriction control determiner 26 further determines whether there is the information of priority control rejection on the terminal 16 (step S22). When the restriction control is set and when there is no information of priority control rejection, the restriction control determiner 26 transmits the connection request with the priority information to the priority control determiner 20 of the priority control server 12 (step S23). The priority control determiner 20 in the priority control server 12 determines whether priority information is included in the connection request received from the restriction control determiner 26. When the priority information is included, the priority control determiner 20 compares the priority control time slot in the priority information with the present time (step S24). When the present time is included in the priority control time slot, the priority control determiner 20 requests the base station 14 to execute the priority control (step S25). The base station 14 performs the priority control, using a restriction rate lower than the normal restriction rate, for the terminal 16 (step S26).

The priority control system 10 as described above issues the priority control time slot as a priority in order of connection requests when there occur the connection requests over available resources of the mobile communication system. This encourages users to originate calls (connection requests) in their priority control time slots and can temporally spread connection requests congested in a short period of time and reduce loads on the mobile communication system. The users can reduce unnecessary connection requests (reattempts) used to be made, because of the execution of the priority control in the specific time slots, and this can reduce frustration due to failure in connection.

The present invention is not limited to the embodiment described above.

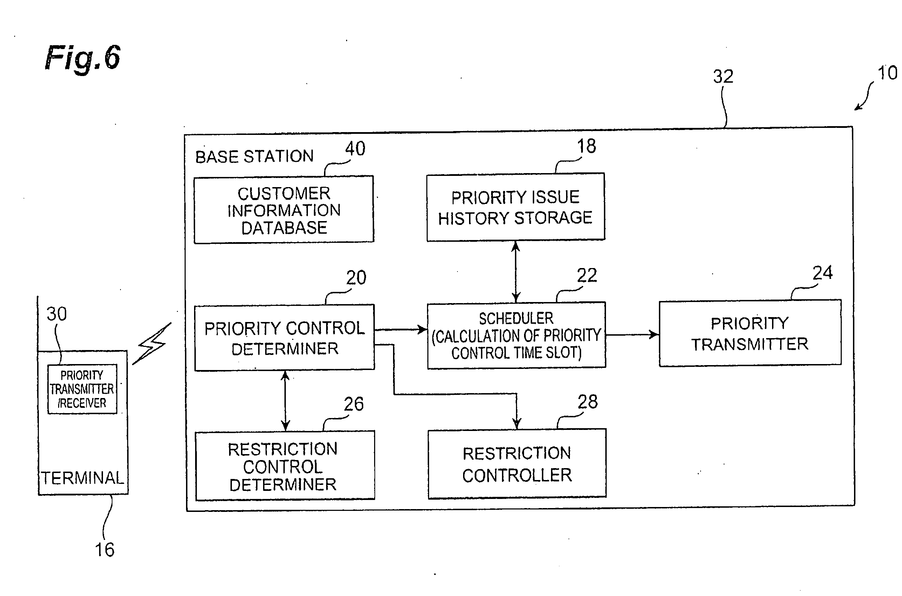

For example, a base station 32 may be provided with the functions of the priority control server 12. Fig. 6 is a schematic configuration diagram showing the base station 32 as the second embodiment of the present invention. As shown in the same drawing, the base station 32 comprises the following functional components: priority issue history storage 18, priority control determiner 20, scheduler 22, priority transmitter 24, restriction control determiner 26, restriction controller 28, and customer information database 40. Besides the configuration shown in Fig. 6, the components of the priority control and the base station described above may be arranged at respective different places.

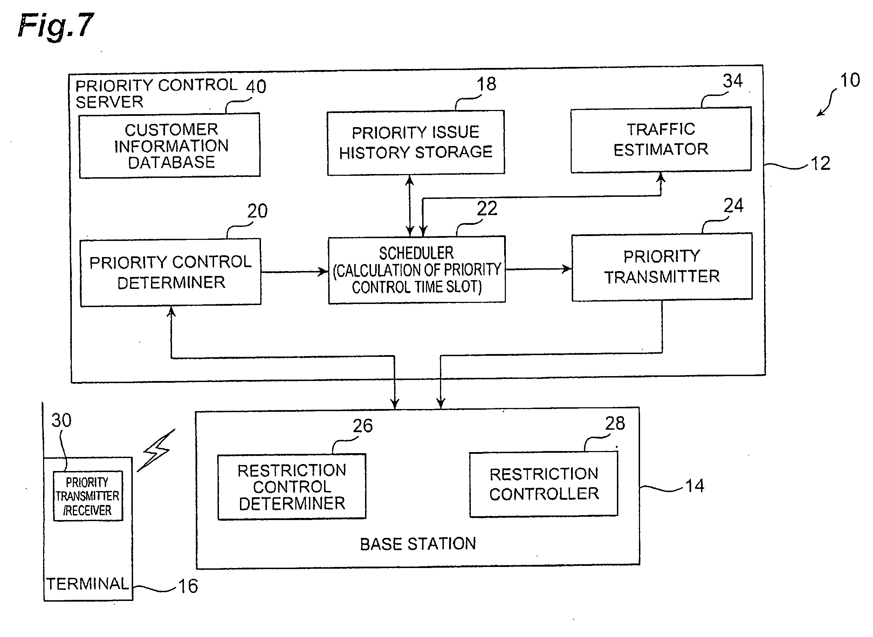

The priority control system 10 of the present invention preferably comprises a traffic estimating section (traffic estimating means). Fig. 7 is a schematic configuration diagram showing a priority control system as the third embodiment of the present invention. As shown in the same figure, the priority control system 10 comprises the following functional components: priority issue history storage 18, priority control determiner 20, scheduler 22, priority transmitter 24, customer information database 40, and traffic estimator 34. Only the component different from the priority control system 10 of Fig. 1 will be described below.

The traffic estimator 34 estimates occurrence of future traffic, based on event and past traffic occurrence situations to affect occurrence of traffic, such as fireworks displays and soccer matches scheduled in future.

When determining the priority control time slot with reference to the priority issue history storage 18, the scheduler 22 dynamically changes the priority count issued per unit time slot, based on the traffic estimation received from the traffic estimator 34. More specifically, where an increase is estimated in occurrence of traffic, for example, the priority control time slot of ten minutes is allocated to each of five users, instead of the normal allocation of the priority control time slot of ten minutes to each of ten users.

The above function optimizes the number of priorities issued and, for example, enables minimization of a waiting time to the priority control time slot and minimization of blocking probability during the priority control.

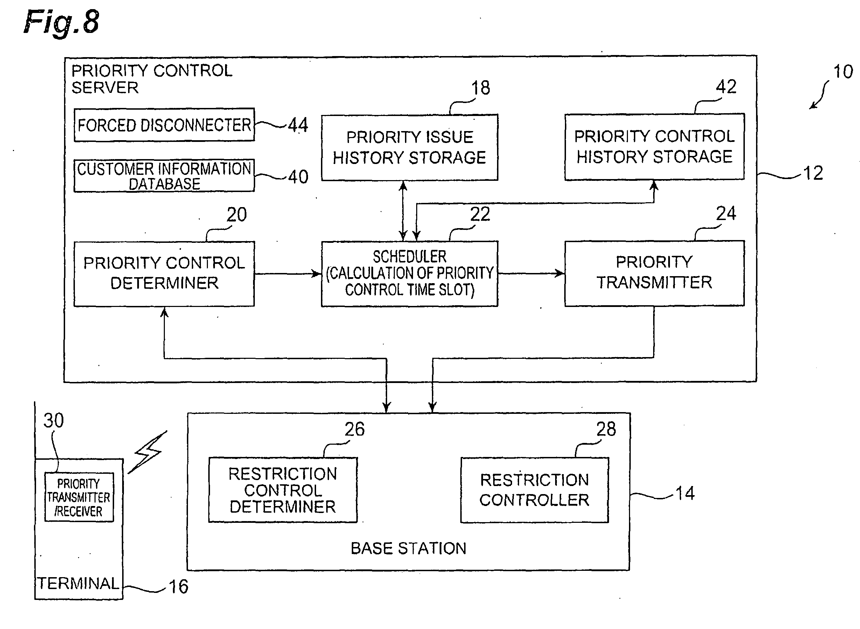

The priority control system 10 according to the above embodiment preferably comprises a priority control history storage (priority control history storing means). Fig. 8 is a schematic configuration diagram showing a priority control system as the fourth embodiment of the present invention. The priority control history storage 42 shown in Fig. 8 stores a record of a time of reception of priority control and success/failure of connection. The scheduler 22 refers to the priority issue history storage 18 and the priority control history storage 42 and compares the number of priorities issued with the actual priority control count to calculate a better priority issue count. Specifically, when the actual priority control count is smaller than the expected number of terminals for which the priority control will be executed, the number of priorities issued is increased to define more terminals as objects of priority control.

The above function optimizes the number of priorities issued and, for example, enables minimization of the waiting time to the priority control time slot and minimization of blocking probability during the priority control.

The priority control system 10 according to the above embodiment preferably comprises a forced disconnecter 44 and the scheduler 22 determines an available time. The scheduler 22 calculates a priority control time slot, determines an available time for a terminal as an object for an issue of the priority, and notifies the priority transmitter 24 of the available time and the priority control time slot as a priority. The available time may be preliminarily determined as three minutes or the like, or may be determined based on a user attribute or the like. The forced disconnecter 44 is arranged as follows: when the available time in the priority has passed for the terminal connected to the communication system by priority control, the forced disconnecter 44 executes a forced disconnection of the terminal.

The above function enables accurate estimation of traffic volume (number of connections x holding time) during the priority control, and enables more adaptive execution of priority control in accordance with subscription plans of respective users. The above function thus optimizes the number of priorities issued and, for example, enables minimization of the waiting time to the priority control time slot and minimization of blocking probability during the priority control.

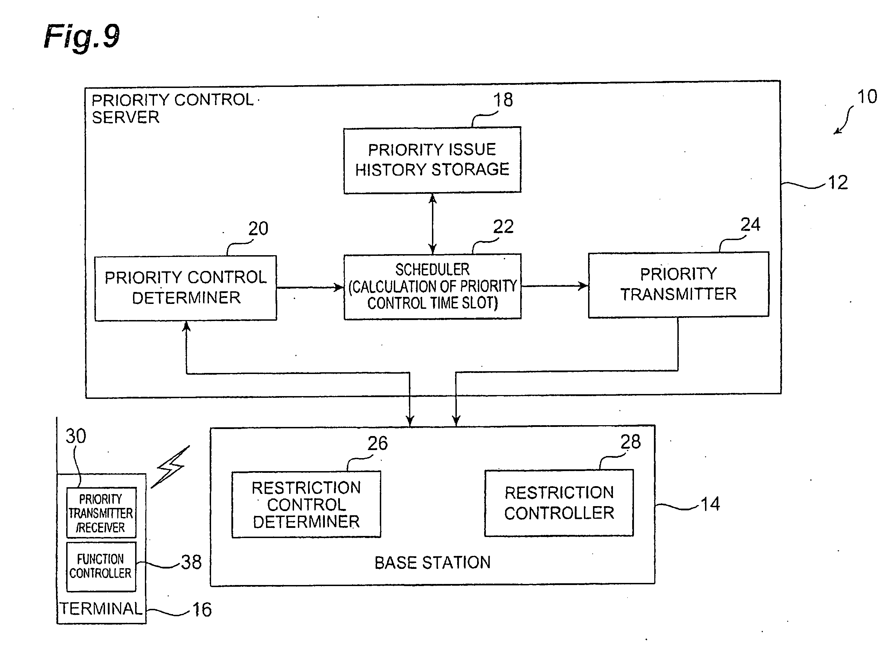

The terminal in the priority control system 10 according to the present invention preferably comprises a function controller. Fig. 9 is a schematic configuration diagram showing a priority control system 10 as the fifth embodiment of the present invention. The function controller 38 terminates the originating function of the terminal up to the priority control start time, in conjunction with acquisition of the priority. For example, in the example of Fig. 2, if the priority control start time is 16:30 June 30, 2005, the function controller 38 terminates the originating function of the terminal 16 up to 16:30.

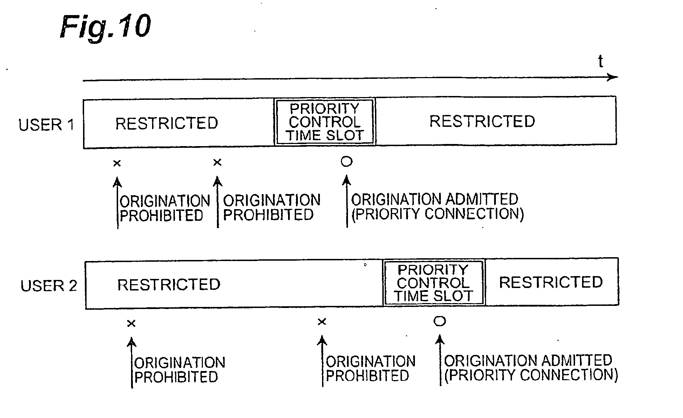

The above function can steadily suppress reattempts up to the priority control time slot, as shown in Fig. 10, and thus enables secure reduction in the loads on the communication system.

The priority transmitter 24 in the priority control system 10 according to any one of the first to fifth embodiments is preferably configured as follows: when a connection request is rejected from a terminal subjected to the priority control, the transmitter 24 again transmits to the terminal the priority used on the occasion of reception of the priority control.

The above function permits the terminal to use the priority any number of times in the priority control time slot before a connection is made to the communication system, and this improves the connection rate in the priority control time slot.

The scheduler 22 in the priority control system 10 according to any one of the first to fifth embodiments is preferably configured to perform scheduling taking account of each user attribute. The scheduler 22 issues a priority containing an extra priority control time slot closer to the present time, instead of the priority containing the normal priority control time slot, in accordance with the user attribute such as the subscription plan of communication service of the user. For example, where an ordinary user is provided with a priority associated with a priority control time slot starting from 16:30, which is 30 minutes after 16:00 as the present time, a specific user is provided with a priority starting from 16:10 which is 10 minutes after the present time.

The above function enables more adaptive issue of the priority in accordance with the subscription plan of the user and so on, and enables dynamic provision of service quality for each user.

The restriction controller 28 in the priority control system 10 according to any one of the first to fifth embodiments is preferably configured to perform the restriction control taking account of the user attribute. The restriction controller executes the priority control at a restriction rate lower than the restriction rate in the normal priority control, in accordance with the user attribute such as the subscription plan of communication service of each user. For example, an ordinary user is admitted to make connection at 60% of the connection request amount during the priority control, while a specific user is admitted to make connection at 80% of the connection request amount.

The above function enables more adaptive execution of the priority control in accordance with the subscription plan of the user and enables dynamic provision of service quality for each user.

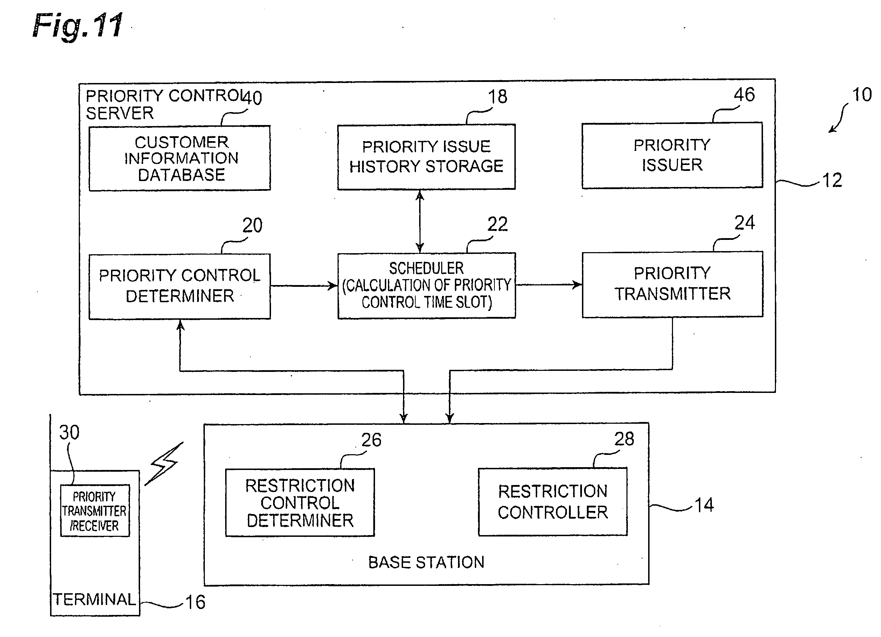

The priority control system 10 according to any one of the first to fifth embodiments preferably comprises a priority issuer. Fig. 11 is a diagram showing a configuration of a priority control system according to the sixth embodiment of the present invention. The priority issuer 46 shown in Fig. 11 is not arranged to automatically give the priority to the terminal 16 originating a call during the restriction control, but is arranged to accept an issue request for a priority from the terminal 16 in advance and to issue a priority for reception of priority control only during a specific limited time in exchange for a charge. For example, supposing a user paid a charge through the terminal 16 to the priority issuer 46 and received a priority associated with a priority control time slot from 16:30 to 16:40 July 30, 2005 with respect to the present time of 15:00 June 30, 2005, the user can make a connection request at a relatively low restriction rate in the priority control time slot.

The above function enables the issue of the priority right suitable for user's convenience and enhances user's convenience of use of the priority control system.

It is noted that the priority control system of the present invention is not limited to the above embodiments but can be modified in a variety of ways without departing from the scope of the present invention as defined in the appended claims.

## Claims

1. A priority control system for performing priority control upon a connection request of communication from a terminal, comprising:
priority control determining means (26) arranged as follows: when the connection request from the terminal does not contain priority information including a priority control time slot of the terminal, the priority control determining means requests an issue of new priority information; when the connection request from the terminal contains the priority information, the priority control determining means performs a comparison between the priority control time slot in the priority information and a present time; when it is determined by the comparison that the priority time slot includes the present time, the priority control determining means requests the priority control; when it is determined by the comparison that the priority time slot does not include the present time, the priority control determining means requests an issue of new priority information;
scheduling means (22) for, when the priority control determining means requests the issue of the new priority information, determining a priority control time slot associated with the new priority information of the terminal;
priority transmitting means (24) for transmitting to the terminal the new priority information including the priority control time slot determined by the scheduling means; and
restriction controlling means (28) for, when the priority control determining means requests the priority control, performing the priority control of the terminal.

2. The priority control system according to Claim 1, further comprising priority issue history storing means for storing an issued priority count as a number of priorities issued per unit time slot, and a maximum available count as a number of priorities admissible per unit time slot,
wherein the scheduling means sequentially determines the priority time slot associated with the new priority information in order of receipt of the connection request of the terminal so that the issued priority count does not exceed the maximum available count, with reference to the priority issue history storing means.

3. The priority control system according to Claim 1 or 2, further comprising traffic estimating means for estimating a connection request amount,
wherein the scheduling means determines the priority control time slot, using the connection request amount calculated by the traffic estimating means.

4. The priority control system according to Claim 2 or 3, further comprising priority control history storing means for storing a record of a priority control count as a number of terminal connections based on the priority control per unit time slot,
wherein the scheduling means refers to the priority control history storing means to compare the issued priority count with the priority control count to determine the maximum available count.

5. The priority control system according to any one of Claims 1 to 4, wherein when the connection request from the terminal subjected to the priority control is rejected, the priority transmitting means again transmits to the terminal the priority information contained in the connection request.

6. The priority control system according to any one of Claims 1 to 5, wherein the scheduling means gives a specific terminal the priority information including the priority control time slot relatively close to the present time.

7. The priority control system according to any one of Claims 1 to 6, wherein the restriction control means performs the priority control at a restriction rate relatively lower than a restriction rate in the priority control, for a specific terminal.

8. The priority control system according to any one of Claims 1 to 7, further comprising a priority issuer for preliminarily receiving an issue request for the priority information from the terminal and for issuing a priority including a specific priority control time slot.

9. The priority control system according to any one of Claims 1 to 8, wherein the terminal comprises:
priority transmitting/receiving means for receiving the new priority information from the priority transmitting means and for transmitting the connection request with the new priority information therein.

10. A priority control method of performing priority control upon a connection request of communication from a terminal, comprising:
a priority control determining step arranged as follows: when the connection request from the terminal does not contain priority information including a priority control time slot of the terminal, the priority control determining step is to request an issue of new priority information; when the connection request from the terminal contains the priority information, the priority control determining step is to perform a comparison between the priority control time slot in the priority information and a present time; when it is determined by the comparison that the priority time slot includes the present time, the priority control determining step is to request the priority control; when it is determined by the comparison that the priority time slot does not include the present time, the priority control determining step is to request an issue of new priority information;
a scheduling step arranged as follows: when the issue of the new priority information is requested in the priority control determining step, the scheduling step is to determine a priority control time slot associated with the new priority information of the terminal;
a priority transmitting step of transmitting to the terminal the new priority information containing the priority control time slot determined in the scheduling step;
a restriction control step of performing the priority control of the terminal when the priority control is requested in the priority control determining step; and
a priority transmitting/receiving step wherein when the terminal receives the new priority information, the terminal transmits the connection request with the new priority information therein.

## Patentansprüche

1. Prioritäts-Kontroll-System zum Durchführen von Prioritäts-Kontrolle auf eine Kommunikationsverbindungs-Anforderung von einem Endgerät hin, aufweisend:
• Prioritäts-Kontrolle-Ermittlungs-Mittel (26) eingerichtet wie folgt: wenn die Verbindungs-Anforderung von dem Endgerät keine einen Prioritäts-Kontroll-Zeitschlitz des Endgeräts enthaltende Prioritäts-Information enthält, fordert das Prioritäts-Kontroll-Ermittlungs-Mittel eine Ausgabe von neuer Prioritäts-Information an; wenn die Verbindungs-Anforderung von dem Endgerät die Prioritäts-Information enthält, führt das Prioritäts-Kontroll-Ermittlungs-Mittel einen Vergleich zwischen dem Prioritäts-Kontroll-Zeitschlitz in der Prioritäts-Information und einer gegenwärtigen Zeit durch; wenn durch den Vergleich ermittelt wird, dass der Prioritäts-Zeitschlitz die gegenwärtige Zeit enthält, fordert das Prioritäts-Kontroll-Ermittlungs-Mittel die Prioritäts-Kontrolle an; wenn durch den Vergleich ermittelt wird, dass der Prioritäts-zeitschlitz die gegenwärtige Zeit nicht enthält, fordert das Prioritäts-Kontroll-Ermittlungs-Mittel eine Ausgabe von neuer Prioritäts-Information an;
• Zeitplanungs-Mittel (22) zum, wenn das Prioritäts-Kontroll-Ermittlungs-Mittel die Ausgabe der neuen Prioritäts-Information anfordert, Ermitteln eines mit der neuen Prioritäts-Information des Endgeräts verbundenen Prioritäts-Kontroll-Zeitschlitzes;
• Prioritäts-Übertragungs-Mittel (24) zum Übertragen zu dem Endgerät der neuen Prioritäts-Information enthaltend den von dem Zeitplanungs-Mittel ermittelten Prioritäts-Kontroll-Zeitschlitz; und
• Beschränkungs-Kontroll-Mittel (28) zum, wenn das Prioritäts-Kontroll-Ermittlungs-Mittel die Prioritäts-Kontrolle anfordert, Durchführen der Prioritäts-Kontrolle für das Endgerät.

2. Prioritäts-Kontroll-System gemäß Anspruch 1,
ferner aufweisend Prioritäts-Ausgabe-Historie-Speicher-Mittel zum Speichern einer Ausgegebene-Priorität-Zahl als einer Anzahl von pro Einheits-Zeitschlitz ausgegebenen Prioritäten, und einer Maximal-Verfügbar-Zahl als einer Anzahl von pro Einheits-Zeitschlitz zulässigen Prioritäten,
wobei das Zeitplanungs-Mittel sequentiell den Prioritäts-Zeitschlitz verbunden mit der neuen Prioritäts-Information ermittelt in der Empfangs-Reihenfolge der Verbindungs-Anforderung des Endgeräts, so dass die Ausgegebene-Priorität-Zahl die Maximal-Zulässig-Zahl nicht übersteigt, unter Bezugnahme auf das Prioritäts-Ausgabe-Historie-Speicher-Mittel.

3. Prioritäts-Kontroll-System gemäß Anspruch 1 oder 2, ferner aufweisend Verkehrs-Schätzungs-Mittel zum Schätzen einer Verbindungs-Anforderungs-Menge,
wobei das Zeitplanungs-Mittel den Prioritäts-Kontroll-Zeitschlitz ermittelt unter Verwendung der von dem Verkehrs-Schätzungs-Mittel berechneten Verbindungs-Anforderungs-Menge.

4. Prioritäts-Kontroll-System gemäß Anspruch 2 oder 3, ferner aufweisend Prioritäts-Kontroll-Historie-Speicher-Mittel zum Speichern einer Aufzeichnung einer Prioritäts-Kontroll-Zahlung als einer Anzahl von Endgerät-Verbindungen basierend auf der Prioritätskontrolle pro Einheits-Zeitschlitz,
wobei das Zeitplanungs-Mittel Bezug nimmt auf das Prioritäts-Kontroll-Historie-Speicher-Mittel zum Vergleichen der Ausgegebene-Priorität-Zahl mit der Prioritäts-Kontroll-Zahl zum Ermitteln der Maximal-Verfügbar-zahl.

5. Prioritäts-Kontroll-System gemäß einem der Ansprüche 1 bis 4,
wobei, wenn die Verbindungs-Anforderung von dem Endgerät unter der Prioritäts-Kontrolle abgelehnt wird, das Prioritäts-Übertragungs-Mittel zu dem Endgerät wieder die in der Verbindungs-Anforderung enthaltene Prioritäts-Information sendet.

6. Prioritäts-Kontroll-System gemäß einem der Ansprüche 1 bis 5,
wobei das Zeitplanungs-Mittel einem spezifischen Endgerät die Prioritäts-Information enthaltend den Prioritäts-Kontroll-Zeitschlitz relativ nahe der gegenwärtigen Zeit gibt.

7. Prioritäts-Kontroll-System gemäß einem der Ansprüche 1 bis 6,
wobei das Beschränkungs-Kontroll-Mittel die Prioritäts-Kontrolle durchführt an einer Beschränkungs-Rate relativ niedriger als eine Beschränkungs-Rate in der Prioritäts-Kontrolle, für ein spezifisches Endgerät.

8. Prioritäts-Kontroll-System gemäß einem der Ansprüche 1 bis 7,
ferner aufweisend einen Prioritäts-Ausgeber zum vorher Empfangen einer Ausgabe-Anforderung für die Prioritäts-Information von dem Endgerät und zum Ausgeben einer Priorität enthaltend einen spezifischen Prioritäts-Kontroll-Zeitschlitz.

9. Prioritäts-Kontroll-System gemäß einem der Ansprüche 1 bis 8,
wobei das Endgerät aufweist:
Prioritäts-Übertragungs/Empfangs-Mittel zum Empfangen der neuen Prioritäts-Information von dem Prioritäts-Übertragungs-Mittel und zum Übertragen der Verbindungs-Anforderung mit der neuen Prioritäts-Information darin.

10. Prioritäts-Kontroll-Verfahren des Durchführend von Prioritäts-Kontrolle auf eine Kommunikations-Verbindungs-Anforderung von einem Endgerät hin, aufweisend:
• einen Prioritäts-Kontrolle-Ermittlungs-Schritt, eingerichtet wie folgt: wenn die Verbindungs-Anforderung von dem Endgerät keine einen Prioritäts-Kontroll-Zeitschlitz des Endgeräts enthaltende Prioritäts-Information enthält, ist der Prioritäts-Kontroll-Ermittlungs-Schritt zum Anfordern einer Ausgabe von neuer Prioritäts-Information; wenn die Verbindungs-Anforderung von dem Endgerät die Prioritäts-Information enthält, ist der Prioritäts-Kontroll-Ermittlungs-Schritt zum Durchführen eines Vergleichs zwischen dem Prioritäts-Kontroll-Zeitschlitz in der Prioritäts-Information und einer gegenwärtigen Zeit; wenn durch den Vergleich ermittelt wird, dass der Prioritäts-Zeitschlitz die gegenwärtige Zeit enthält, ist der Prioritäts-Kontroll-Ermittlungs-Schritt zum Anfordern der Prioritäts-Kontrolle; wenn durch den Vergleich ermittelt wird, dass der Prioritäts-Zeitschlitz die gegenwärtige Zeit nicht enthält, ist der Prioritäts-Kontroll-Ermittlungs-Schritt zum Anfordern einer Ausgabe von neuer Prioritäts-Information;
• einen Zeitplanungs-Schritt, eingerichtet wie folgt: wenn die Ausgabe der neuen Prioritäts-Information in dem Prioritäts-Kontroll-Ermittlungs-Schritt angefordert wird, ist der Zeitplanungs-Schritt zum Ermitteln eines mit der neuen Prioritäts-Information des Endgeräts verbundenen Prioritäts-Kontroll-Zeitschlitzes;
• einen Prioritäts-Übertragungs-Schritt des Übertragens zu dem Endgerät der neuen Prioritäts-Information enthaltend den in dem Zeitplanungs-Schritt ermittelten Prioritäts-Kontroll-Zeitschlitz;
• einen Beschränkungs-Kontroll-Schritt des Durchführens der Prioritäts-Kontrolle des Endgeräts, wenn die Prioritäts-Kontrolle in dem Prioritäts-Kontroll-Ermittlungs-Schritt anfordert wird; und
• einen Prioritäts-Übertragung/Empfangs-Schritt, in dem, wenn das Endgerät die neue Prioritäts-Information empfängt, das Endgerät die Verbindungs-Anforderung mit der neuen Prioritäts-Information darin überträgt.

## Revendications

1. Système de contrôle de priorité destiné à exécuter un contrôle de priorité lors d'une demande de connexion de communication en provenance d'un terminal, comprenant :
des moyens de détermination de contrôle de priorité (26) agencés de la façon suivante : lorsque la demande de connexion en provenance du terminal ne contient pas d'informations de priorité qui comprennent une tranche de temps de contrôle de priorité du terminal, les moyens de détermination de contrôle de priorité demandent une présentation de nouvelles informations de priorité ; lorsque la demande de connexion en provenance du terminal contient les informations de priorité, les moyens de détermination de contrôle de priorité exécutent une comparaison entre la tranche de temps de contrôle de priorité dans les informations de priorité et un temps actuel ; lorsque la comparaison permet de déterminer que la tranche de temps de priorité comprend le temps actuel, les moyens de détermination de contrôle de priorité demandent le contrôle de priorité ; lorsque la comparaison permet de déterminer que la tranche de temps de priorité ne comprend pas le temps actuel, les moyens de détermination de contrôle de priorité demandent une présentation de nouvelles informations de priorité ;
des moyens de planification (22) destinés à déterminer, lorsque les moyens de détermination de contrôle de priorité demandent la présentation de nouvelles informations de priorité, une tranche de temps de contrôle de priorité associée aux nouvelles informations de priorité du terminal ;
des moyens d'émission de priorité (24) destinés à émettre vers le terminal les nouvelles informations de priorité qui comprennent la tranche de temps de contrôle de priorité déterminée par les moyens de planification ; et
des moyens de contrôle de restriction (28) destinés à exécuter, lorsque les moyens de détermination de contrôle de priorité demandent le contrôle de priorité, le contrôle de priorité du terminal.

2. Système de contrôle de priorité selon la revendication 1, comprenant en outre des moyens de stockage d'historique de présentation de priorités destinés à stocker un compte de priorités présentées comme étant le nombre de priorités présentées par tranche de temps unitaire, et un compte disponible maximum comme étant le nombre de priorités admissibles par tranche de temps unitaire,
dans lequel les moyens de planification déterminent de manière séquentielle la tranche de temps de priorité associée aux nouvelles informations de priorité, par ordre de réception de la demande de connexion du terminal de telle sorte que le compte de priorités présentées ne dépasse pas le compte disponible maximum, en se référant aux moyens de stockage d'historique de présentation de priorités.

3. Système de contrôle de priorité selon la revendication 1 ou la revendication 2, comprenant en outre des moyens d'estimation de trafic destinés à estimer une quantité de demande de connexion,
dans lequel les moyens de planification déterminent la tranche de temps de contrôle de priorité, en se servant de la quantité de demande de connexion calculée par les moyens d'estimation de trafic.

4. Système de contrôle de priorité selon la revendication 2 ou la revendication 3, comprenant en outre des moyens de stockage d'historique de contrôle de priorité destinés à stocker un enregistrement d'un compte de contrôle de priorité comme étant le nombre de connexions du terminal sur la base du contrôle de priorité par tranche de temps unitaire,
dans lequel les moyens de planification se réfèrent aux moyens de stockage d'historique de contrôle de priorité de manière à comparer le compte de priorités présentées avec le compte de contrôle de priorité de façon à déterminer le compte disponible maximum.

5. Système de contrôle de priorité selon l'une quelconque des revendications 1 à 4, dans lequel lorsque la demande de connexion en provenance du terminal soumis au contrôle de priorité est rejetée, les moyens d'émission de priorité émettent de nouveau vers le terminal les informations de priorité contenues dans la demande de connexion.

6. Système de contrôle de priorité selon l'une quelconque des revendications 1 à 5, dans lequel les moyens de planification fournissent à un terminal spécifique les informations de priorité qui comprennent la tranche de temps de contrôle de priorité relativement proche du temps actuel.

7. Système de contrôle de priorité selon l'une quelconque des revendications 1 à 6, dans lequel les moyens de contrôle de restriction exécutent le contrôle de priorité à une vitesse de restriction relativement plus faible que la vitesse de restriction dans le contrôle de priorité, pour un terminal spécifique.

8. Système de contrôle de priorité selon l'une quelconque des revendications 1 à 7, comprenant en outre un dispositif de présentation de priorité destiné à recevoir au préalable une demande de présentation des informations de priorité en provenance du terminal et à émettre une priorité qui comprend une tranche de temps de contrôle de priorité spécifique.

9. Système de contrôle de priorité selon l'une quelconque des revendications 1 à 8, dans lequel le terminal comprend :
des moyens d'émission / réception de priorité destinés à recevoir les nouvelles informations de priorité en provenance des moyens d'émission de priorité et à émettre la demande de connexion avec les nouvelles informations de priorité qui se trouvent à l'intérieur.

10. Procédé de contrôle de priorité destiné à exécuter un contrôle de priorité lors d'une demande de connexion de communication en provenance d'un terminal, comprenant :
une étape de détermination de contrôle de priorité agencée de la façon suivante : lorsque la demande de connexion en provenance du terminal ne contient pas d'informations de priorité qui comprennent une tranche de temps de contrôle de priorité du terminal, l'étape de détermination de contrôle de priorité consiste à demander une présentation de nouvelles informations de priorité ; lorsque la demande de connexion en provenance du terminal contient les informations de priorité, l'étape de détermination de contrôle de priorité consiste à exécuter une comparaison entre la tranche de temps de contrôle de priorité dans les informations de priorité et un temps actuel ; lorsque la comparaison permet de déterminer que la tranche de temps de priorité comprend le temps actuel, l'étape de détermination de contrôle de priorité consiste à demander le contrôle de priorité ; lorsque la comparaison permet de déterminer que la tranche de temps de priorité ne comprend pas le temps actuel, l'étape de détermination de contrôle de priorité consiste à demander une présentation de nouvelles informations de priorité ;
une étape de planification agencée de la façon suivante : lorsque la présentation des nouvelles informations de priorité est demandée dans l'étape de détermination de contrôle de priorité, l'étape de planification consiste à déterminer une tranche de temps de contrôle de priorité associée aux nouvelles informations de priorité du terminal ;
une étape d'émission de priorité destinée à émettre vers le terminal les nouvelles informations de priorité qui contiennent la tranche de temps de contrôle de priorité déterminée dans l'étape de planification ;
une étape de contrôle de restriction destinée à exécuter le contrôle de priorité du terminal lorsque le contrôle de priorité est demandé dans l'étape de détermination de contrôle de priorité ; et
une étape d'émission / réception de priorité dans laquelle lorsque le terminal reçoit les nouvelles informations de priorité, le terminal émet la demande de connexion avec les nouvelles informations de priorité qui se trouvent à l'intérieur.
